(19) Europäisches Patentamt
European Patent Office
Office européen des brevets

(11) Publication number : **0 444 968 A2**

(12) **EUROPEAN PATENT APPLICATION**

(21) Application number : **91301783.6**

(22) Date of filing : **04.03.91**

(51) Int. Cl.[5] : **C08G 63/199,** C08L 67/02, C08J 5/18

(30) Priority : **02.03.90 JP 51425/90**

(43) Date of publication of application :
**04.09.91 Bulletin 91/36**

(84) Designated Contracting States :
**AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Nakane, Toshio**
**885-11, Miyajima**
**Fuji-shi, Shizuoka (JP)**
Inventor : **Konuma, Hiroaki**
**371-7 Okitsu-Inouecho**
**Shimizu-shi, Shizuoka (JP)**
Inventor : **Hijikata, Kenji**
**8-8, Fujimidai**
**Michima-shi, Shizuoka (JP)**

(74) Representative : **Jackson, Peter et al**
**HYDE, HEIDE & O'DONNELL 10-12 Priests Bridge**
**London SW15 5JE (GB)**

(54) **Copolyester resin and resin composition.**

(57) A copolyester resin, from which can be produced a flexible, colourless film or sheet having improved heat-sealing properties, is prepared by polycondensation of :
(a) terephthalic acid or a dialkyl terephthalate,
(b) at least one alkylene glycol having 2 to 8 carbon atoms and
(c) a dimer diol comprising as the main component a compound of the following formula (1) :

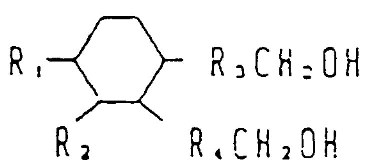

(1)

wherein each of $R_1$ to $R_4$ is an unsaturation-free, substantially linear group,
$R_1$ and $R_2$ each represent an alkyl group and
$R_3$ and $R_4$ each represent an alkylene group, the total number of carbon atoms of $R_1$, $R_2$, $R_3$ and $R_4$ being 22 to 34.

EP 0 444 968 A2

# COPOLYESTER RESIN AND RESIN COMPOSITION

The present invention relates to a copolyester resin and resin composition which have reduced colorability and excellent flexibility and which display excellent heat-sealability when formed into a film or sheet.

Aromatic polyesters such as polyethylene terephthalate (PET) and polybutylene terephthalate (PBT) have well-balanced physical properties such as heat resistance, mechanical strength and gas impermeability and are used as valuable engineering plastics in various fields.

Since, however, these polyesters have a glass transition point (Tg) exceeding room temperature, they have not hitherto been used when high flexibility at low temperature is required.

There has also been a problem in effectively exploiting the excellent gas impermeability of a film or sheet formed from such polyesters because they have poor heat-sealability and this has created difficulties in making a bag or other container from the film or sheet.

After intensive investigations made for the purpose of solving the above-described problems, the inventors have found that a copolyester produced by introducing a specified comonomer unit into an aromatic polyester has an excellent hue, a high hydrolysis resistance and a high flexibility which is not reduced even at a low temperature and that a film or sheet produced therefrom has excellent heat-sealability. The present invention has been completed on the basis of these findings.

Thus the present invention relates to a copolyester resin produced by the polycondensation of, as the main constituents,

(a) terephthalic acid or a dialkyl terephthalate,
(b) at least one alkylene glycol having 2 to 8 carbon atoms and
(c) a dimer diol comprising as the main component a compound of the following formula (1):

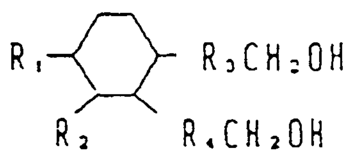

(1)

wherein each of $R_1$ to $R_4$ is an unsaturation-free, substantially linear group and, in particular, $R_1$ and $R_2$ each represent an alkyl group and $R_3$ and $R_4$ each represent an alkylene group, the total number of carbon atoms of $R_1$, $R_2$, $R_3$ and $R_4$ being 22 to 34.

A detailed description is given below on the starting materials for the copolyesters according to the present invention. As the acidic material (a), terephthalic acid or a dialkyl terephthalate is mainly used. Preferred is a dialkyl terephthalate, particularly dimethyl terephthalate.

As the starting diol, at least one alkylene glycol (b) having 2 to 8 carbon atoms is used. Preferred main alkylene glycols include ethylene glycol, 1,3-propylene glycol and 1,4-butylene glycol among which 1,4-butylene glycol is particularly preferred.

The most characteristic feature of the copolyester constituting the present invention is that a diol compound (c) called "dimer diol" is used as another indispensable diol component.

The dimer diol comprises a compound of the above-mentioned formula (1) obtained by dimerizing an unsaturated fatty acid having 15 to 21 carbon atoms and then reducing the dimer as the main component (at least 50% by weight).

Typical examples of the dimer diols of the general formula (1) are those wherein the total number of carbon atoms of $R_1$, $R_2$, $R_3$ and $R_4$ is 28.

The copolyester of the present invention produced by the polycondensation of the above-described (a), (b) and (c) essentially comprises at least two main constituent units of the following formulae (2) and (3):

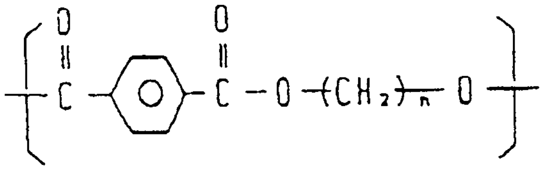

(2)

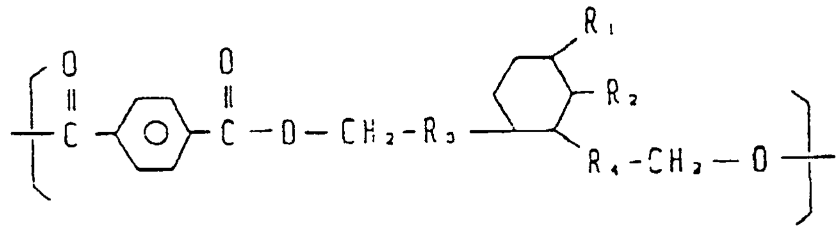

(3)

wherein $R_1$, $R_2$, $R_3$ and $R_4$ are as defined above for the formula (1) and n represents an integer of 2 to 8.

In the course of the production of the dimer diol of the above formula (1), a diol compound of the following formula (4) is also formed as a by-product, and it may be used as a mixture thereof with the dimer diol of the above formula (1) without being separated therefrom in some cases:

$$\begin{array}{l} R'_1 - CH - R'_3CH_2OH \\ \qquad\quad | \\ R'_2 - CH - CH_2R'_4CH_2OH \end{array} \qquad (4)$$

wherein each of $R'_1$ to $R'_4$ is an unsaturation-free, substantially linear group and, in particular, $R'_1$ and $R'_2$ each represents an alkyl group and $R'_3$ and $R'_4$ each represent an alkylene group, the total number of carbon atoms of $R'_1$, $R'_2$, $R'_3$ and $R'_4$ being 25 to 37, particularly 31.

In such a case, the copolyester comprises a constituent unit of the following formula (5) in addition to the above-described constituent units (2) and (3):

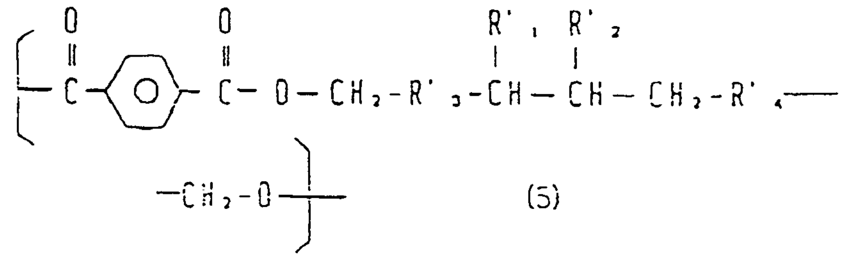

(5)

For example, usually a mixture of 60 to 85% by weight of the dimer diol of the formula (1) and 40 to 15% by weight of the diol compound of the formula (4) is used.

The dimer diol of the formula (1) may contain, in addition to the diol compound of the formula (4) formed as the by-product, a small amount of a diol compound of the formula (1) wherein the positions of $R_1$ and $R_3CH_2OH$ are changed with each other and a diol compound having a bicyclo ring.

Further the copolyester of the present invention may comprise also a small amount of another constituent unit derived from an auxiliary ester-forming monomer used.

The copolyester of the present invention can be produced by the polycondensation of the above-described monomer components according to an ordinary copolymerization process for polyesters.

When the copolyester resin of the present invention is used as a resin to be injection-molded or as a resin to form a film or sheet, the amount of the dimer diol (c) to be introduced into the aromatic polyester is preferably 0.5 to 20 molar %, particularly preferably 5 to 10 molar % based on the terephthalic acid or the dialkyl terephthalate (a) which is the acid component of the polyester.

When the amount of the dimer diol (c) is less than 0.5 molar %, none of the effects expected in the present invention such as excellent impact resistance, flexibility at a low temperature and heat-sealability can be sufficiently attained and, on the contrary, when it exceeds 20 molar %, the melting point of the copolyester is seriously lowered and the heat resistance which is one of the characteristic properties of the aromatic polyester is unfavourably impaired.

When a high heat resistance is not so eagerly required, more than 20 molar % of the dimer diol (c) may be properly used.

The intrinsic viscosity of the copolyester resin of the present invention usually ranges from 0.5 to 2.0. From the viewpoint of film forming properties, it is preferably, 1.0 to 1.5. When the copolymer having a high intrinsic viscosity (or, in other words, a high degree of polymerization) is intended, the copolymer produced by melt polymerization is further subjected to a suitable solid phase polymerization by an ordinary process for increasing the molecular weight of polyesters.

Methods for forming a film or sheet from the copolyester resin include the T-die method and the inflation method. The inflation method is preferred.

A film or sheet made of the resin of the present invention can be easily heat-sealed and is therefore suitable for use as a packaging material, since it has a low heat-sealing temperature and a wide heat-sealing temperature range of at least 20 C. In contrast a PBT film having a narrow heat-sealing temperature range cannot be easily heat-sealed. Further the film or sheet made of the resin of the present invention is suitable for use for storing frozen substances, since it has an excellent flexibility even at a low temperature.

With regard to the preferred thickness of the film or sheet, if the thickness is insufficient, the mechanical strength of the film or sheet per se and the excellent practical effect cannot be sufficiently achieved. The film of the resin of the present invention exhibits excellent heat-sealability even when it is relatively thick, while the thickness of a PBT film must be reduced, since its heat-sealability is quite poor. However, when the thickness exceeds a certain limit, the heat-sealability is unfavourably impaired. Therefore, a desirable thickness of the film or sheet ranges from 10 to 500 μm, more desirably from 15 to 300 μm.

The copolyester resin of the present invention is useful also as an injection molding resin having excellent impact resistance and flexibility even at low temperature. Other thermoplastic resins and organic or inorganic fillers may be incorporated into the resin of the present invention according to the use thereof so far as the effect of the present invention is not impaired.

The thermoplastic resins thus usable are not particularly limited. Examples of them include polyolefins such as polyethylene and polypropylene; aromatic polyesters of an aromatic dicarboxylic acid and a diol or hydroxy carboxylic acid such as polyethylene terephthalate; as well as polyacetals (homopolymers and copolymers), polystyrene, polyvinyl chloride, polyamides, polycarbonates, ABS, polyphenylene oxides, polyphenylene sulphides and fluororesins. These thermoplastic resins may be used either singly or in the form of a mixture of two or more of them.

The inorganic fillers may be fibrous, powdery or platy inorganic fillers which can be selected depending on their required duty.

Suitable fibrous fillers include inorganic fibrous materials such as glass fiber, asbestos fiber, silica fiber, silica/alumina fiber, alumina fiber, zirconia fiber, boron nitride fiber, silicon nitride fiber, boron fiber, potassium titanate fiber and fibers of metals such as stainless steel, aluminum, titanium, copper and brass.

The powdery fillers include carbon black; graphite; silicates such as silica, quartz powder, glass beads, milled glass fiber, glass balloon, glass powder, calcium silicate, aluminum silicate, kaolin, talc, clay, diatomaceous earth and wollastonite; metal oxides such as iron oxide, titanium oxide, zinc oxide, antimony trioxide and alumina; metal sulphates such as calcium carbonate and magnesium carbonate; as well as ferrite, silicon carbide, silicon carbide, silicon nitride, boron nitride and various metal powders.

The platy fillers include mica, glass flake and metal foil. These inorganic fillers may be used either singly or in combination of two or more of them.

The organic fillers include heat-resistant, high-tenacity synthetic fibers such as aromatic polyester fibers, liquid-crystal polymer fibers and aromatic polyamide and polyimide fibers.

The inorganic or organic filler may be used in combination with a known surface-treating agent according to the desired properties. The surface-treating agents include functional compounds such as epoxy compounds, isocyanate compounds, titanate compounds and silane compounds. These fillers may be used after having been surface-treated or they may be added together with other components in the preparation of the material.

The inorganic or organic filler is used in an amount of 0.01 to 60 % by weight based on the whole composition.

The copolyester resin obtained by the present invention has the following excellent properties:

1) it is suitable for use as a material for bags, since it has excellent heat-sealability and it can be heat-sealed over a wide temperature range;

2) it is suitable for use as a packaging material for foods to be kept in a freezer or to be cooked in a microwave oven, since the resin has a high heat resistance and excellent gas-barrier properties and its flexibility

can be kept even at a low temperature;

3) it is usable as a material for tubes and pipes of which a high flexibility is required in the fields of extrusion molding and injection molding, in addition to the above-described thin articles.

The following non-limiting Examples further illustrate the present invention

Example 1

194.2 parts by weight of dimethyl terephthalate (DMT), 175.7 parts by weight of 1,4-butylene glycol (BG) and 26.9 parts by weight of dimer diol (DDO) were placed in a reactor equipped with a stirrer and distillation tube together with a predetermined amount of a transesterification catalyst (tetrabutyl titanate). After thoroughly replacing air in the reactor with nitrogen, the temperature was elevated to 160°C under atmospheric pressure and stirring was started. Then the temperature was further slowly elevated and methanol formed as a by-product was distilled off. After the temperature reached 240°C, the pressure in the ractor was gradually reduced and the stirring was continued under a pressure of 27 Pa (0.2 Torr) for 3.5 h to give a copolyester having a limiting viscosity of 0.88.

The properties of the resultant copolyester were examined as described below.

The dimer diol unit introduction rate based on the acid component of the copolyester was determined according to $^1$H-NMR spectroscopy using trifluoroacetic acid-d as the solvent.

The glass transition point (Tg) and melting point (Tm) were determined according to JIS K 7121.

The copolyester was melted at 240°C and extruded through a T-die onto a cooling roll at 25° to form a sheet having a thickness of 200μm.

To examine the deterioration of the properties of the sheet at a low temperature, tensile impact breaking strengths at 0°C, -10°C and -20°C were determined at a pulling rate of 100 mm/sec according to JIS Z 1702 to calculate the retentivity thereof bases on the strength at ambient temperature.

To determine the hydrolysis resistance, the sheet was immersed in hot water at 90°C for 20 days and then dried at 100°C for 2 h to determine the retentivity of the tensile impact breaking strength.

The results are given in Table 1.

Examples 2 and 3

The polymerization was conducted in the same manner as that of Example 1 except that the amounts of BG and DDO were varied to give copolyesters having various compositions. They were evaluated in the same manner as that of Example 1. The results are given in Table 1

Comparative Example 1

The polymerization was conducted in the same manner as that of Example 1 except that no DDO was used and the amount of BG was altered to 180.2 parts by weight to give a PBT polyester having a limiting viscosity of 0.88, which was evaluated in the same manner as that of Example 1. The results are given in Table 1.

Example 4

The copolyester obtained in Example 2 was pelletized and the pellets were subjected to solid-phase polymerization at 190°C in a nitrogen stream to give a polyester of a high degree of polymerization, which was evaluated in the same manner as that of Example 1. The results are given in Table 1.

Comparative Example 2

PBT obtained in Comparative Example 1 was subjected to solid-phase polymerization in the same manner as that of Example 4 to give a polyester of a high degree of polymerization, which was evaluated in the same manner as that of Example 1. The results are given in Table 1.

Table 1

| | Ex. 1 | Ex. 2 | Ex. 3 | Comp. Ex. 1 | Ex. 4 | Comp. Ex. 2 |
|---|---|---|---|---|---|---|
| DMT (parts by weight) | 194.2 | 194.2 | 194.2 | 194.2 | 194.2 | 194.2 |
| BG ( ditto ) | 175.7 | 171.2 | 162.2 | 180.2 | 171.2 | 180.2 |
| DDO ( ditto ) | 26.9 | 53.7 | 107.5 | - | 53.7 | - |
| Limiting viscosity | 0.88 | 0.85 | 0.79 | 0.88 | 1.20 | 1.22 |
| Rate of introduction of DDO unit (molar %) | 5.0 | 9.9 | 20.1 | - | 9.9 | - |
| Tg (°C) | 24 | 22 | 21 | 30 | 22 | 30 |
| Tm (°C) | 206 | 194 | 164 | 220 | 193 | 220 |
| Retentivity of tensile impact breakage strength at low temperature (%) | | | | | | |
| 0°C | 81 | 81 | 85 | 43 | 79 | 41 |
| -10°C | 67 | 74 | 81 | 35 | 66 | 34 |
| -20°C | 60 | 64 | 79 | 35 | 62 | 30 |
| Hydrolysis resistance (%) | 76 | 80 | 88 | 60 | 75 | 54 |

Example 5 and Comparative Example 3

The copolyester obtained in Example 1 or PBT obtained in Comparative Example 1 was melt-kneaded together with 10% by weight of glass fibers and a sheet was prepared therefrom in the same manner as that of Example 1. The sheet was evaluated in the same manner as that of Example 1. The results are given in Table 2.

Table 2

| | Ex. 5 | Comp. Ex. 3 |
|---|---|---|
| Retentivity of tensile impact breakage strength at low temperature (%) | | |
| 0 °C | 89 | 49 |
| -10 °C | 82 | 46 |
| -20 °C | 80 | 42 |
| Hydrolysis resistance (%) | 82 | 62 |

Example 6

The copolyester having a high degree of polymerization as obtained in Example 4 was melted at 240°C and formed into a film having a thickness of 40μm by the inflation method. Two films thus produced were put together and heat-sealed with a heat bar at varied temperatures to determine the heat-sealing strength thereof according to JIS Z 1707. The results are given in Table 3.

Comparative Example 4

PBT having a high degree of polymerization as obtained in Comparative Example 2 was formed into a film and its heat-sealability was evaluated in the same manner as that of Example 6. The results are given in Table 3.

Table 3

| Temperature of heat bar (°C) | Example 6 | Comparative Example 4 |
|---|---|---|
| 205 | heat-sealing impossible | heat-sealing impossible |
| 210 | 1.21 | ditto |
| 215 | 1.48 | ditto |
| 220 | 1.49 | ditto |
| 225 | 1.56 | ditto |
| 230 | 1.66 | ditto |
| 235 | 1.44 | ditto |
| 240 | melted | melted |

(unit of heat-sealing strength: kgf)

## Claims

1. A copolyester resin produced by the polycondensation of, as the main constituents,
   (a) terephthalic acid or a dialkyl terephthalate,
   (b) at least one alkylene glycol having 2 to 8 carbon atoms and
   (c) a dimer diol comprising as the main component a compound of the following formula (1):

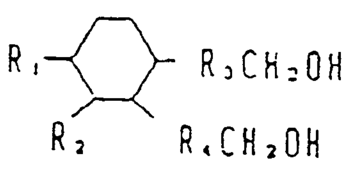

(1)

wherein each of $R_1$ to $R_4$ is an unsaturation-free, substantially linear group,
$R_1$ and $R_2$ each represent an alkyl group and
$R_3$ and $R_4$ each represent an alkylene group, the total number of carbon atoms of $R_1$, $R_2$, $R_3$ and $R_4$ being 22 to 34.

2. A copolyester resin according to claim 1, wherein the constituent (a) is dimethyl terephthalate.

3. A copolyester resin according to claim 1 or claim 2, wherein the amount of the dimer diol (c) is in the range from 0.5 to 20 molar %, based on the terephthalic acid or dialkyl terephthalate (a).

4. A copolyester resin according to claim 3, wherein the amount of the dimer diol (c) is in the range from 5 to 10 molar %, based on the terephthalic acid or dialkyl terephthalate (a).

5. A copolyester resin according to any preceding claim, wherein the alkylene glycol (b) is 1,4-butylene glycol.

6. A copolyester resin according to any preceding claim and having an intrinsic viscosity of 1.0 to 1.5.

7. A copolyester resin composition comprising the copolyester resin according to any preceding claim and an inorganic or organic filler.

8. A copolyester resin composition according to claim 7, wherein the amount of filler is 0.01 to 60% by weight, based on the whole composition.

9. A polyester film or sheet comprising a copolyester resin or resin composition according to any preceding claim.

10. A polyester film or sheet according to claim 9 and having a thickness in the range 10 to 500 μm.